# EUROPÄISCHE PATENTANMELDUNG

(11) **EP 4 683 207 A1**
(43) Veröffentlichungstag der Anmeldung: **21.01.2026**
(21) Anmeldenummer: 24189757.8
(22) Anmeldetag: 19.07.2024
(51) Int. Cl.: H02P 6/185, H02P 21/16, H02P 29/66, H02P 29/60

(54) **VERFAHREN ZUR ERMITTLUNG EINES WIEDERZUSCHALTZEITPUNKTES BEI EINER GRENZTEMPERATURBEDINGTEN ABSCHALTUNG EINER PERMANENTERREGTEN SYNCHRONMASCHINE**

(71) Anmelder: Innomotics GmbH, 90441 Nürnberg (DE)
(72) Erfinder: GAUDENZ, Markus Matthias, 91056 Erlangen (DE); HÖSLE, Markus, 91058 Erlangen (DE)
(74) Vertreter: Siemens Patent Attorneys

(57) **Zusammenfassung**

Die Erfindung betrifft ein Verfahren zur thermischen Betriebsoptimierung einer mit einem Umrichter (50) gespeisten dynamoelektrischen Maschine (1) eines mit Permanentmagneten (14) bestückten Rotors (9) ,
wobei der Rotor (9) einen magnetisch leitfähigen Grundkörper, insbesondere ein axial geschichtetes Blechpaket (11) aufweist, der in im Wesentlichen axial verlaufenden Ausnehmungen (13) zumindest abschnittsweise umfänglich und/oder axial Permanentmagnete (14) vorsieht,
wobei ein oder mehrere Permanentmagnete (14) einen Pol bilden, der einen Nordpol (N) oder Südpol (S) Richtung Außenumfang (18) des Rotors (9) ausbildet,
wobei der leitfähige Grundkörper und die jeweiligen Permanentmagnete (14) Teil jeweils eines geschlossenen Magnetkreises (22) bilden,
wobei in den Magnetkreisen (22) Mittel vorhanden sind, die in Magnetisierungsrichtung der Permanentmagnete (14) magnetisch in Serie angeordnet sind und die Permanentmagnete (14) vor Übertemperatur und damit vor irreversibler Entmagnetisierung schützen, wobei jeder Pol (19) des Rotors (9) oder jeder Permanentmagnet (14) eine Schicht (20) aufweist, indem das Mittel bei Überschreiten einer vorgebbaren Grenztemperatur eine stoffspezifische Beeinflussung des Magnetkreises (22) bewirkt, wobei dabei
-Änderungen der EMK und/oder
-Änderung der Induktivitäten (dL/dt) der dynamoelektrischen Maschine (1), und/oder
-Änderung des Phasenwinkels ϕ als Phasenverschiebung zwischen Motorstrom und Motorspannung bzw. Ausgangsstrom und Ausgangsspannung des Umrichters (50),und/oder
-Abweichungen von einem hinterlegten Flussmodell,

erfasst werden, um dann daraus weiterer temperaturreduzierende Aktionen, wie zumindest-Stromreduktion, Lastreduktion oder Notabschalten der dynamoelektrischen Maschine (1) und/oder Zuschalten eines Fremdlüfters einzuleiten, um thermisch nach einer minimierten Zeit wieder zuschalten zu können.

## Beschreibung

Die Erfindung betrifft ein Verfahren zur Erfassung einer Grenztemperatur von Permanentmagneten einer permanenterregten Synchronmaschine und zur Ermittlung eines (Wieder-) Zuschaltzeitpunktes einer permanenterregten Synchronmaschine, aufgrund einer thermisch bedingten Abschaltung bei einer Grenztemperatur von Permanentmagneten eines mit Permanentmagneten versehenen Rotors. Des Weiteren betrifft die Erfindung einen Rotor einer permanenterregten Synchronmaschine, eine permanenterregte Synchronmaschine, als auch die Anwendung einer permanenterregten Synchronmaschine.

Bei Rotoren dynamoelektrischer Maschinen mit Permanentmagneten, insbesondere permanenterregten Synchronmaschinen mit vergrabenen Permanentmagneten werden die Permanentmagnete in im Rotor vorhandene Taschen axial eingeschoben und ggf. durch Stege positioniert.

Bei der Dimensionierung und dem Betrieb von Permanentmagnet-Synchronmotoren müssen die zulässigen Arbeitstemperaturen der Permanentmagnete berücksichtigt werden, um diese vor einer irreversiblen Entmagnetisierung zu schützen. Gerade bei Einsatz der weitverbreiteten Seltenerd-Werkstoffe mit negativen Temperaturkoeffizienten Tk(HcJ) (z.B. NdFeB; NeodymEisenBor) fordert die Abnahme der Gegenfeldbelastbarkeit mit zunehmender Arbeitstemperatur zuverlässige und genaue Kenntnisse über den Betriebszustand und damit vor allem über die Temperatur des Motors.

Eine direkte und kontinuierliche Messung der Magnettemperatur ist aufgrund der Einbringung der Permanentmagnete in den rotierenden Teil des Motors, also den Rotor, nur in Ausnahmefällen wirtschaftlich und technisch sinnvoll realisierbar
Rein rechenbasierte Modelle erfordern die Abbildung des Motormodells im Umrichter, wodurch mögliche Motor-Umrichter-Kombinationen, auch als Antrieb bezeichnet, in der Praxis stark eingeschränkt werden. Dies geschieht insbesondere dann, wenn z.B. unterschiedliche Hersteller von Motor und Umrichter kundenseitig zusammengeschaltet werden sollen.

Des Weiteren haben derartige thermischen Modelle aufgrund der Modellierungstiefe und der begrenzten Sensorik nur einen begrenzten Gültigkeitsbereich. Die Dimensionierung und der Betrieb des Motors müssen daher mit Rücksicht auf den ungenauen Kenntnisstand angepasst werden. Dies führt deshalb aus Gründen der Betriebszuverlässigkeit z.B. zu Auswahl höherwertigerer Magnetgüten der Permanentmagnete, und/oder zu höherer Materialeinsatz der Permanentmagnete und/oder zu einem verstärktem Kühlkonzept des Antriebs, oder eine Inkaufnahme einer vergleichsweise geringeren Motorausnutzung.

Neben den dadurch steigenden Kosten kann der Motor dennoch nicht zuverlässig vor irreversibler Entmagnetisierung im Zusammenhang mit hoher Arbeitstemperatur des Magnetmaterials geschützt werden.

Aus der DE 10 2020 202 204 A1 ist ein Material bekannt, das eine Curietemperatur aufweist, die einer Schwelltemperatur der Permanentmagneten entspricht und damit ein Über- oder Unterschreiten der Schwelltemperatur erfassbar sein soll.

Nachteilig ist dabei jedoch immer, dass die Motorausnutzung vergleichsweise gering bleibt, um auf jeden Fall nicht in die Entmagnetisierung der Permanentmagnete zu gelangen.

Ausgehend davon liegt der Erfindung die Aufgabe zugrunde eine thermischen Betriebsoptimierung einer permanenterregten Synchronmaschine zu schaffen, die insbesondere nach einer thermisch bedingten Abschaltung eine möglichst schnelle Wieder-Zuschaltung dieser permanenterregten Synchronmaschine ermöglicht.

Die Lösung der gestellten Aufgabe gelingt durch die Merkmale der unabhängigen Ansprüche. Vorteilhafte Ausgestaltungen sind den abhängigen Ansprüchen zu entnehmen.

Grundsätzlich wird also das Problem gelöst, wie der Umrichter einer permanenterregten Synchronmaschine dieser ermöglicht, nach einer thermisch bedingten Abschaltung zum Schutz der Permanentmagneten des Rotors, möglichst schnell wieder voll oder mit einer vorgebbaren Belastung wieder zu zuschalten, und durch welches Verfahren er dies bewerkstelligt.

Bei dem erfindungsgemäßen Verfahren zur Bestimmung eines (Wieder-) Zuschaltzeitpunktes einer Grenztemperatur bedingten Abschaltung eines mit Permanentmagneten versehenen Rotors einer dynamoelektrischen Maschine, insbesondere einer permanenterregten Synchronmaschine, die mittels eines Umrichters gespeist wird, liegen dabei folgende Überlegungen zugrunde.

In vereinfachter Form kann angenommen werden, dass der durch das Wicklungssystem einer dynamoelektrischen Maschine bzw. eines Motors fließende Strom eine Wirkkomponente und eine Blindkomponente aufweist. Diese sind dem Umrichter bzw. Stromrichter unter anderem zur Steuerung des Magnetfeldes und des Momentes der dynamoelektrischen Maschine bekannt. Diese Werte liegen einer Regelung des Antriebs zugrunde.

Es kann die EMK der dynamoelektrischen Maschine eines vorliegenden Betriebszustandes bestimmt werden. Dieser kann aus Messwerten wie Drehzahl und dem Stromrichter bekannten Werten wie beispielsweise der Fluss bestimmt werden. Ggf können weitere Werte aus dem Datenblatt, wie Wicklungszahl oder Polpaarzahl der dynamoelektrischen Maschine, für die Berechnung angezogen werden.

Des Weiteren sind die Werte der Induktivitäten aus Messwerten des Stroms oder durch Werte, wie Raumzeiger, die aus diesen Messwerten gewonnen werden, bestimmbar. Bei der Bestimmung aus Messwerten kann neben dem Strom auch die Ableitung des Stromes für die Bestimmung der Induktivität herangezogen werden.

Ebenso ist die Bestimmungen des Unterschiedes zwischen erfasster Induktivität und im Umrichter hinterlegten Induktivität (beispielsweise aus Datenblattwerten) der dynamoelektrischen Maschine möglich.

Anstelle der Induktivität des Ersatzschaltbildes kann auch der Phasenwinkel 4> als Phasenverschiebung zwischen Motorstrom und Motorspannung bestimmt werden. Diese Auswertung setzt jedoch einen Betriebspunkt mit einem Drehmoment voraus, da aus dem Verhältnis nur die Informationen über die Motorinduktivität gewonnen werden kann, wenn der Winkel ungleich 90° ist.

Diese Werte der dynamoelektrischen Maschine ändern sich, wenn die den Permanentmagneten zumindest teilweise umgebenden Mittel bei dementsprechend steigender Temperatur "ansprechen", d.h. einen Wechsel von Ferromagnetismus zu Paramagnetismus verursachen.

Der Antrieb reagiert daraufhin mit temperaturreduzierenden Aktionen, wie Stromreduktion in das Wicklungssystem des Motors, Lastreduktion oder Notabschalten der dynamoelektrischen Maschine und/oder Zuschalten eines Fremdlüfters, um den Betrieb fortzusetzen.

Um nunmehr eine Feststellung des Istzustandes, insbesondere des thermischen Istzustandes des Rotors der dynamoelektrischen Maschine, nach einer temperaturreduzierenden Aktion zu erhalten, werden Testimpulse des Umrichters in die Maschine bzw. das Wicklungssystem gegeben, insbesondere bei Leerlauf der dynamoelektrischen Maschine.

Zumindest einer der oben genannten Werte wird aufgrund vom Umrichter erzeugten Testimpulsen in das Wicklungssystem ermittelt und darauf basierend die Entscheidung über die Regelung und den Umrichter für eine Wiederzuschaltung oder eine weitere Lastreduktion oder Abschaltung der dynamoelektrischen Maschine und/oder Zuschalten eines (weiteren) Fremdlüfters veranlasst.

Bei der direkten Bestimmung der Grenztemperatur wird aus gemessenen Größen, wie beispielsweise des Stroms, der Regelung bekannten Größen, wie beispielsweise die Ausgangsspannung des Stromrichters und Modellparametern beispielsweise für das thermische Temperaturmodell eine Grenztemperatur bestimmt. Der Vorteil liegt darin, dass unabhängig vom Hersteller die Überwachung des Motors auf der Grundlage der Temperatur und entsprechender Grenzwerte erfolgen kann. Diese Daten sind aus den Datenblättern bekannt.

Bei einer indirekten Bestimmung der Temperatur wird auf die Bestimmung eines exakten Temperaturwertes verzichtet. Vielmehr wird ein Modellparameter herangezogen, um den Motor zu überwachen. Es hat sich herausgestellt, dass der Zustand der Magnetisierung, also auch eine drohende temporäre Entmagnetisierung der Permanentmagneten des Rotors, insbesondere anhand der Motorinduktivität erkannt werden kann. Bei bekannten Motoren ist der Zusammenhang zwischen Magnetisierung und Induktivität hinreichend genau bekannt und es kann ein Schutz auf Basis einer Induktivitätsbestimmung durchgeführt werden. Der Vorteil liegt darin, dass diese Werte einfach bestimmbar sind und auf Rechenschritte eines mehr oder weniger zutreffenden Temperaturmodells verzichtet werden kann.

Bei bekannten Motoren ist der Zusammenhang zwischen Magnetisierung und Induktivität zwar hinreichend genau bekannt und es kann ein Schutz auf Basis einer Induktivitätsbestimmung durchgeführt werden. Jedoch liegt nunmehr der Vorteil dieses Verfahrens darin, dass eine Veränderung des magnetischen Verhaltens besonders zuverlässig erkannt wird.

Ein Schutz über ein Temperaturmodell erfordert ein hohes Maß an Sicherheit in Bezug auf die Grenzwerte, so dass durch das vorgeschlagene Verfahren die dynamoelektrische Maschine im Grenzbereich deutlich besser ausgenutzt und vor Schäden geschützt werden kann.

Bei einer Temperaturerhöhung der dynamoelektrischen Maschine, insbesondere des mit Permanentmagneten bestückten Rotors in Richtung Grenztemperatur der Permanentmagneten tritt eine Erhöhung des magnetischen Widerstandes (Reluktanz) des eingesetzten Materials auf. Dies führt zu einer Erhöhung des magnetischen Widerstandes (Reluktanz) des Materials und einer damit verbundenen Begrenzung des magnetischen Flusses in den Magnetkreisen, was dadurch zu einer Begrenzung des magnetischen Flusses u.a. durch in die Permanentmagneten führt. Untersuchungen haben gezeigt, dass sich dies in beschriebener Art und Weise auf die Motorinduktivität auswirkt.

Ein Magnetkreis ist dabei ein geschlossener Pfad eines magnetischen Flusses, der in durch einen oder mehrere Permanentmagnete und - im Betrieb der dynamoelektrischen Maschine - durch ein bestromtes Wicklungssystem gebildet wird.

Ausgangspunkt bildet dabei der Einsatz eines Materials (z.B. CeFeB), dessen Curie-Temperatur im Bereich der maximalen Arbeitstemperatur des eingesetzten Permanentmagnetwerkstoffes liegt. Bei Betrieb unterhalb dieser Grenztemperatur weist der Werkstoff ein stark ferromagnetisches Magnetisierverhalten auf. Damit ist ein ordnungsgemäßer Betrieb der dynamoelektrischen Maschine und des Antriebs möglich.

Folgende Temperaturbezeichnungen werden im Weiteren verwendet.

Die Curietemperatur ist die Temperatur, bei der ein jeweiliges Material einen Wechsel von Ferromagnetismus zu Paramagnetismus erfährt. Diese Temperatur wird erfindungsgemäß auch als Grenztemperatur des "Mittels" oder kurz nur als Grenztemperatur bezeichnet.

Die Arbeitstemperatur ist die Temperatur, der u.a. die Permanentmagnete und der Rotor ausgesetzt sind.

Die Grenztemperatur des Permanentmagneten ist die maximale zulässige Arbeitstemperatur des Permanentmagneten, bei der (noch) keine irreversible Entmagnetisierung auftritt, wenn der Motor in einem Betriebszustand mit dem maximalen im Entwicklungsprozess vorgesehenen Gegenfeld belastet wird. Ein solcher Betriebszustand kann, je nach Anforderungen an den Motor z.B. eine hohe Überlast oder ein Fehlerfall (z.B. Stoßkurzschluss) sein.

Die Übertemperatur des Permanentmagneten bezeichnet eine Temperatur (größer als die Grenztemperatur des Permanentmagneten), ab der eine irreversible Entmagnetisierung des Permanentmagneten eintritt, wenn die dynamoelektrische Maschine in einem Betriebszustand mit dem maximalen vorgesehenen Gegenfeld belastet wird. Ein solcher Betriebszustand kann, je nach Anforderungen an diese Maschine, insbesondere bei einem Motor z.B. eine hohe Überlast oder ein Fehlerfall (z.B. Stoßkurzschluss) sein.

Das Mittel weist also ein Material mit einer Curietemperatur auf, die kleiner als die Grenztemperatur der Permanentmagneten ist (also im Bereich der maximale zulässigen Arbeitstemperatur des Permanentmagneten liegt) und selbst einen reversiblen Wechsel von Ferromagnetismus zu Paramagnetismus bei dementsprechenden Temperaturwechseln aufweist.

Oberhalb der Material-Grenztemperatur (kleiner als die Permanentmagnet-Grenztemperatur) weist das Material einen Wechsel von ferromagnetischem zum paramagnetischen Materialverhalten auf. Dieser Grenzübergang ist dabei vorteilhafterweise ein reversibler Prozess, so dass die "normale" Funktionsweise/Betrieb der dynamoelektrischen Maschine bzw. des Antriebs unterhalb dieser Grenztemperatur nicht beeinträchtigt wird. Nach Überschreiten dieser Grenztemperatur und anschließendem Unterschreiten der Grenztemperatur stellt sich wieder das "normale" Verhalten ein.

Die Anordnung dieses Materials als Schicht findet im Magnetkreis statt und ist dabei so nah wie möglich und elektromagnetisch in Serie zu den zu schützenden Permanentmagneten des Rotors vorzusehen.

Vorzugsweise wird diese Schicht so nah wie möglich an den Permanentmagneten positioniert. Dabei wird diese Schicht beispielsweise direkt am jeweiligen Permanentmagneten vorgesehenen. Also direkt auf der Nordpolseite und/oder der Südpolseite des Permanentmagneten.

Die Schicht ist in den jeweiligen Magnetkreisen des Rotors seriell zum jeweiligen Permanentmagneten angeordnet. Sie umfängt den Permanentmagneten somit zumindest soweit, dass Feldlinien des Magnetkreises durch die Schicht "müssen". Die Schichtdicke kann optional variieren und ist an den Kanten des Permanentmagneten tendenziell dicker ausgeführt als in der Mitte des Permanentmagneten. Standardmäßig ist die Schicht mit einer konstanten Dicke ausgeführt.

Diese erfindungsgemäße Schicht ist auch bei Permanentmagneten einsetzbar, die als Oberflächenmagnete am Außenumfang des Rotors angeordnet sind.

Als Material dieser Schicht sei beispielhaft das Magnetisierverhalten einer exemplarischen CeFeB-Legierung genannt, welche bei einer Curie-Temperatur von ca. 150°C den Übergang zum paramagnetischen Zustand aufweist und eine Koerzitivfeldstärke Hcj von 50kA/m bei 20°C und 20kA/m bei 120°C aufweist.

Der Permanentmagnet ist unter den normalen Betriebsbedingungen entmagnetisierungsfest ausgelegt und weist eine Curietemperatur auf, die deutlich über der Arbeitstemperatur liegt, typischerweise >300°C, aus der Materialklasse der Neodym-Eisen-Bor Magnete (NdFeB).

Durch die aktive Beeinflussung des Magnetkreises auf Grundlage des Einsatzes von Materialien mit speziellen Stoffeigenschaften, insbesondere der Ausnutzung der Curie-Temperatur, wird erfindungsgemäß sowohl ein reversibler Eigenschutz des Magnetkreises geschaffen, als auch eine einfache Detektion der Grenztemperatur ermöglicht.

Dies wird dadurch erreicht, dass zunächst bei Erreichen der Grenztemperatur oder einer Temperatur größer der Grenztemperatur das Magnetfeld abgeschwächt wird und sich die oben beschriebenen Motorparameter ändern. Daraus lässt sich in nunmehr einfach ein zügiger Wiederzuschaltzeitpunkt ermitteln, indem in vorgebbarer Zeitabschnitten Testimpulse des Umrichters in die dynamoelektrische Maschine gegeben werden.

Konkret wird außerdem die Gegenfeldbelastung der Permanentmagneten bei einem bestimmten Stromzustand reduziert, indem der magnetische Widerstand des Magnetkreises erhöht wird. Somit kann eine dynamoelektrische Maschine im Hinblick auf die Entmagnetisierungsfestigkeit entweder höhere Maximalströme führen oder aber bei gegebenem Maximalstrom erhöhte Temperaturen der Permanentmagnete zulassen.

Also wird in einem ersten Schritt eine Schutzfunktion geschaffen. Die damit einhergehende Änderung der Motorparameter (z.B. Induktivität oder Leerlauf-Spannung (EMK)) ermöglicht weiterhin eine Detektion der Übertemperatur (z.B. im Umrichter).

Der Umrichter kann anhand der Datenblattwerte zuverlässig den Strom in einen Wirkstromanteil, der das Drehmoment der elektrischen Maschine bewirkt, und einen Blindstromanteil zur Erzeugung des Magnetfeldes ermitteln. Eine durch eine Temperaturüberhöhung entstehende Veränderung der Ersatzschaltbildinduktivität erkennt der Motor bzw. Umrichter. Mit anderen Worten der gemessene Strom passt nicht zu der vom Stromrichter erzeugten Spannung und dem vorliegenden Betriebspunkt. Der Betriebspunkt kann beispielsweise aus durch Modelle erzeugte Größen wie beispielsweise dem Fluss oder gemessenen Größen wie beispielsweise der Drehzahl ermittelt werden.

Eine geeignete Detektion ist notwendig, um einen weiteren Temperaturanstieg durch geeignete Gegenmaßnahmen zu verhindern bzw. aktiv Maßnahmen zur Temperaturreduktion einzuleiten.

Mögliche Verfahren zur Detektion wären beispielsweise die Ermittlung der EMK oder des Stroms der dynamoelektrischen Maschine während des Betriebs oder die Ermittlung der Motorinduktivität sowie die Ermittlung des Phasenwinkels ϕ durch den Stromrichter oder Abweichungen von einem hinterlegten Flussmodell.

Im einfachsten Fall kann eine Veränderung des magnetischen Verhaltens der Maschine über die EMK erkannt werden, da der Fluss als Faktor in die Höhe der EMK eingeht. Eine verringerte EMK lässt sich beispielsweise am Wirkstrom erkennen, die die dynamoelektrische Maschine zur Aufrechterhaltung eines geforderten Moments einen höheren Wirkstrom benötigt.

Alternativ oder ergänzend kann das veränderte Verhalten der Maschine anhand des veränderten Blindstroms zur Erzeugung des Magnetfeldes erkannt werden. Da sich Wirkstrom und Blindstrom beide auf den Phasenwinkel ϕ auswirken, steht mit der Auswertung des Phasenwinkels eine besonders robuste Größe zur Erkennung eines veränderten Magnetischen Verhaltens zur Verfügung.

Die Regelung des Stromrichters kann darüber hinaus unplausible Betriebszustände dadurch plausibilisieren, dass die Induktivität an die Betriebsbedingungen angepasst wird. Damit ist es möglich, auch im Störfall eine hohe Regelungsdynamik zu erreichen. Des Weiteren kann damit der zeitliche Verlauf der thermischen Überbeanspruchung erfasst werden. Somit ist erkennbar, ob sich die magnetischen Verhältnisse verbessern oder kritischer werden und weitere Schutzreaktionen erfordern.

Damit greift die Regelung des Antriebs bei Erkennen der veränderten magnetischen Bedingungen am Motor ein, indem sie die einspeisende Leistung in der dynamoelektrischen Maschine zurücknimmt oder ein Notabschalten aufgrund der Motorüberhitzung einleitet. Es muss auf jeden Fall sichergestellt sein, dass die Rotortemperatur zurückgeht. Dies kann beispielsweise in Form einer Leistungsbegrenzung, Momentenbegrenzung oder einer Veränderung, insbesondere Erhöhung, der Taktfrequenz des Stromrichters erfolgen. Eine Temperaturreduktion kann ggf. auch durch eine forcierte Kühlung des Motors mittels Fremdlüfter erfolgen. Auch eine Kombination dieser Maßnahmen weist Vorteile auf.

Es wird also eine Schutzfunktion geschaffen. Die damit verbundene Änderung von Motorparametern (z.B. Induktivität oder Leerlauf-Spannung (EMK)) ermöglicht weiterhin eine Detektion der Übertemperatur vor allem im Rotor durch den Umrichter. Der Umrichter kann anhand der Datenblattwerte zuverlässig den Strom in einen Wirkstromanteil, der das Drehmoment der elektrischen Maschine bewirkt, und einen Blindstromanteil zur Erzeugung des Magnetfeldes ermitteln. Eine durch eine Temperaturüberhöhung vor allem im Rotor durch "ansprechen" der Schicht und der damit entstehende Veränderung der Motorparameter, wie z.B. der Ersatzschaltbildinduktivität erkennt der Motor bzw. Umrichter. Die sich daraus ergebende Leistungsbegrenzung oder gar Abschaltung des Antriebs soll jedoch, um in einem Arbeitsprozess möglichst schnell fortfahren zu können, möglichst schnell aufgehoben werden, dies geschieht nun erfindungsgemäß indem in vorgebbaren Zeitabschnitten Testimpulse des Umrichters in die dynamoelektrische Maschine gegeben werden und deren Parameter erfasst werden. Daraus leitet nunmehr die Regelung ab, ob in den Normalbetrieb des Antriebs gewechselt werden kann, oder ob die oben genannten Maßnahmen zur Temperaturreduzierung weiter eingehalten oder gar verschärft werden müssen.

Eine Temperaturreduktion vor allem des Rotors und dessen Permanentmagneten und der damit Unterschreiten der kritischen Temperatur kann ggf. auch durch eine forcierte Kühlung des Motors mittels Fremdlüfter erfolgen.

Der beschriebene Vorgang schützt zum einen direkt das Magnetmaterial im Rotor durch Absenken des belastenden Gegenfeldes, erlaubt auf der anderen Seite über die feststellbare Beeinflussung von Betriebsgrößen des Motors (z.B. Strom) eine Erfassung der Temperaturüberschreitung durch einen entsprechenden Detektion-Algorithmus im speisenden Frequenzumrichter.

Insgesamt kann damit durch die Schutzschicht in den Magnetkreisen des Rotors eine höhere und sicherere Ausnutzung der eingesetzten Materialien und somit auch des Motors erzielt werden.

Zusätzlich zu dieser Schicht können weitere Mittel zur Gegenfeldstabilität auf der dem Außenumfang des Rotors zugewandten Seite der Ausnehmungen besonders wirksam sein. Dort wirkt sich ein Entmagnetisierungsfeld, das gegebenenfalls durch einen Stoßkurzschlussstrom in einem Wicklungssystem eines Stators des Motors generiert wird, normalerweise besonders negativ aus. Dieses Entmagnetisierungsfeld kann durch Mittel wie Halteelemente oder Stege, besonders reduziert werden. Zusätzlich wird durch diese Haltelemente und/oder Stege auch die Positionierungsfunktion der Permanentmagnete in den Ausnehmungen übernommen.

Ein derartiges Gegenfeld kann sich beispielsweise durch einen Stoßkurzschlussstrom, andere Belastungszustände der permanenterregten Synchronmaschine, hohe Überlastmomente, Stromfehleinprägungen des Umrichters und diverse Kurzschlussfehler im Wicklungssystem ergeben.

Besonders gefährdet sind dabei exponierte Bereiche der Permanentmagnete, wie z.B. die Ecken der Permanentmagnete, da sie im Fehlerfall besonders hohen Gegenfeldern ausgesetzt ist. Dort würde es demnach als erstes zu irreversibler Entmagnetisierung der Permanentmagnete kommen, was durch die Halteelemente oder Stege auf der dem Außenumfang des Rotors zugewandten Seite der Ausnehmungen vermieden wird.

Vorteilhafterweise sind diese Stege, Haltelemente, Funktionshalteteile etc. Teil des Dynamoblechs des Rotors und sind mit ihm einstückig ausgeführt. Dies wird beispielsweise durch einen oder mehrere Stanzvorgänge gewährleistet.

Die Stoßkurzschlussfestigkeit der Maschine kann auch ergänzend oder statt dessen auch durch vergleichsweise aufwändige und damit teure Verwendung von Magnetgüten mit hohem HcJ und/oder durch den Einsatz von dickeren Permanentmagneten erreicht werden.

Die Anordnung der Ausnehmungen bzw. der Permanentmagneten in den Polen des Rotors hängt vom Einsatzgrad der permanenterregten Synchronmaschine ab. Durch Flusskonzentration, wie dies z.B. bei V-förmigen Anordnung oder Doppel-V-förmigen Anordnung oder einer U-Form möglich ist, lassen sich höhere Luftspaltdichten des Magnetfeldes erreichen.

Eine Schrägung und/oder auch Staffelung des Rotors bzw. seiner Pole über die axiale Länge des Rotors betrachtet kann dabei weiterhin ausgeübt werden. Dies reduziert u.a. Rastmomente des permanenterregten Synchronmotors.

Als Anwendungen derartiger Rotoren in permanenterregten Synchronmaschinen sind vor allem in einem industriellen Umfeld wie bei Pumpen, Lüfter, Verdichter, Kompressoren, Rollgängen, Förderanlagen vorgesehen, die eine sehr lange kontinuierliche Betriebsdauer aufweisen. Ebenso ist deren Einsatz bei Traktionsantreiben wie Miningfahrzeugen, E-Bussen, Straßenbahnen oder Zügen vorstellbar.

Nach einer Abschaltung oder einer Leistungsreduzierung des Antriebs - wie oben beschrieben - ist es das Bestreben des Antriebs jedoch möglichst schnell wieder die erwartete oder erforderliche Leistung zu liefern.

Dazu gibt der Umrichter erfindungsgemäß kurze Impulse auf das Wicklungssystem des Stators der dynamoelektrischen Maschine, um die Reaktion des Rotors zu erfassen. Mit anderen Worten, es wird über die erfassten Werte getestet, ob die Arbeitstemperatur unterhalb der Grenztemperatur der Permanentmagnete liegt.

Dazu kann bei einer im Leerlauf befindlichen elektrischen Maschine über eine definierte Zeitspanne ein Magnetfeld in der elektrischen Maschine aufgebaut werden, das kein Moment erzeugt und somit keinen Wirkstrom erzeugt. Die dynamoelektrische Maschine verbleibt im Leerlauf, jedoch mit erhöhtem magnetischen Feld in der Maschine. Anhand der ermittelten EMK und des Blindstroms kann zuverlässig die Motorinduktivität bestimmt werden. Gleichzeitig ist der Betrieb im Leerlauf, also ohne momentbildenen Strom thermisch für die elektrische Maschine auch bei einer vorangegangenen thermischen Überbeanspruchung unkritisch und führt vor allem nicht zu einem wesentlichen weiteren Erwärmen der Maschine.

Bei einer im Betrieb befindlichen und damit momenterzeugenden elektrischen Maschine ist es ebenfalls möglich, das Magnetfeld im Motor kurzzeitig zu erhöhen. Aus der Reaktion des Motors, beispielsweise aus der EMK oder einer Drehzahlveränderung kann dann auf einfache Weise auf die magnetischen Verhältnisse und insbesondere auf die Induktivität des Motors geschlossen werden. Sobald durch dieses Verfahren, betriebenen elektrischen Maschine kann kurzfristig der Blindstrom erhöht werden

Mit anderen Worten: mit Hilfe des Zusatzsignals wird beispielsweise beim Blindstrom getestet, ob sich die magnetischen Verhältnisse durch Abkühlung wieder an das vorgesehene Verhalten mit Betriebsgrößen im zulässigen Bereich der Permanentmagnete hinreichend angenähert haben. Dieser zulässige Bereich verhindert eine Beschädigung des Motors und sichert eine hohe Lebensdauer der elektrischen Maschine und trägt nur optimierten Ausnutzung der dynamoelektrischen Maschine bei.

Dieser angestrebte (Wieder-) Zuschaltvorgang kann zusätzlich auch mit einem flankierenden Temperaturmodell der dynamoelektrischen Maschine unterstützt werden.

Derartige Verfahren werden mit Rotoren von permanenterregten Synchronmaschinen eingesetzt, die vor allem im industriellen Umfeld betrieben werden. Dabei sind sie als Antriebe von Pumpen, Lüfter, Verdichter, Kompressoren, Rollgängen, Förderanlagen vorgesehen, mit einer kontinuierlichen Betriebsdauer, die den Antrieb (insbesondere Motor und Umrichter) thermisch stark fordert und erfindungsgemäß überwacht wird.

Derartige Synchronmaschinen sind auch bei Traktionsantrieben wie Miningfahrzeugen, E-Bussen, Straßenbahnen oder Zügen einsetzbar.

Die der Erfindung zugrundeliegende Idee lässt sich ebenso auf permanenterregte Synchronmaschinen mit Außenläufer übertragen, wie sie z.B. bei direkt angetriebenen Generatoren von Windkraftanlagen eingesetzt werden.

Die der Erfindung zugrundeliegende Idee lässt sich ebenso auf andere dynamoelektrische Maschinen übertragen, die in ihren Rotoren Permanentmagnete aufweisen, also z.B. Synchronmaschinen mit einem Anlaufkäfig oder Synchron-Reluktanz-Maschinen mit Permanentmagneten.

Die Erfindung sowie weitere vorteilhafte Ausgestaltungen der Erfindung werden anhand prinzipiell dargestellter Ausführungsbeispiele näher erläutert, darin zeigen:
FIG 1 prinzipieller Längsschnitt einer dynamoelektrischen Maschine mit einem Umrichter,
FIG 2 Detaildarstellung eines Rotors im Querschnitt.

Es sei angemerkt, dass sich Begriffe wie "axial", "radial", "tangential" etc. auf die in der jeweiligen Figur bzw. im jeweils beschriebenen Beispiel zum Einsatz kommende Achse 6 beziehen. Mit anderen Worten beziehen sich die Richtungen axial, radial, tangential stets auf eine Achse 6 des Rotors 9 und damit auf die entsprechende Symmetrieachse des Stators 8. Dabei beschreibt "axial" eine Richtung parallel zur Achse 6, "radial" beschreibt eine Richtung orthogonal zur Achse 6, auf diese zu oder auch von ihr weg, und "tangential" ist eine Richtung, die in konstantem radialem Abstand zur Achse 6 und bei konstanter Axialposition kreisförmig um die Achse 6 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 9 und Stator 8, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

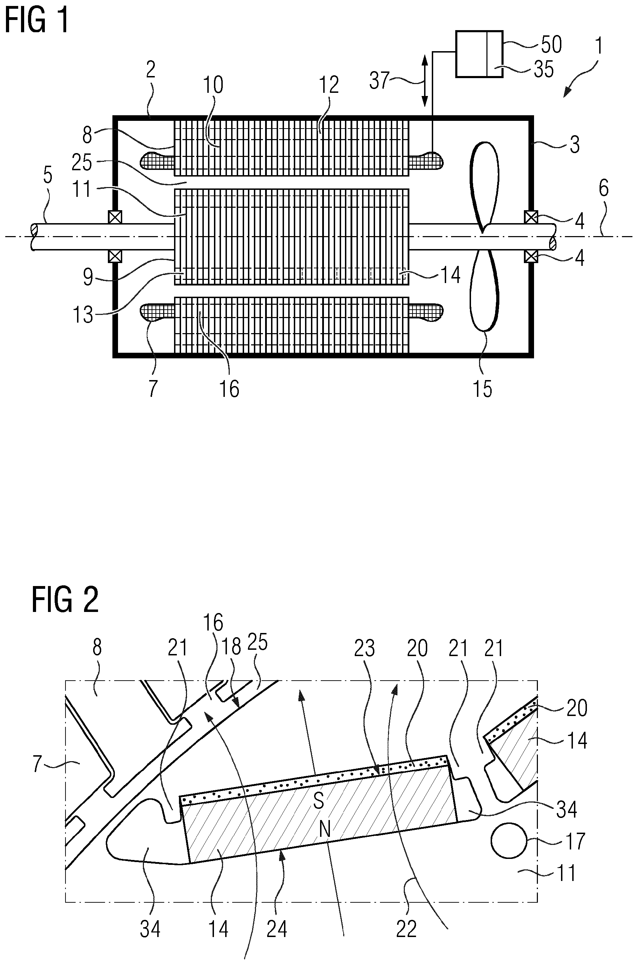

FIG 1 zeigt in einer prinzipiellen Darstellung eine dynamoelektrische permanenterregte Synchronmaschine 1, die von einem Umrichter 50 gespeist wird. Diese Anordnung "permanenterregte Synchronmaschine 1 mit Umrichter 50" wird auch als Antrieb bezeichnet. Der Umrichter 50 mit einer Regelung 35 ist dabei in der dynamoelektrische permanenterregte Synchronmaschine 1 integriert, direkt und unmittelbar an der dynamoelektrischen permanenterregten Synchronmaschine 1 angebracht oder entfernt davon aufgebaut. Dies hängt u.a. davon ab, welche Leistungsklasse der Antrieb aufweist. In jedem Fall findet zwischen der dynamoelektrische permanenterregte Synchronmaschine 1 und dem Umrichter 50 bzw. der Regelung 35 ein - vorzugsweise bidirektionaler - Datenaustausch 37 statt.

Durch einen Luftspalt 25 von einem Stator 8 getrennt, ist ein Rotor 9 mit seinen Permanentmagneten 14 angeordnet. Diese Permanentmagnete 14 sind in dieser Ausführungsform V-förmig innerhalb des Rotors 9 angeordnet. Von zwei Permanentmagneten (pro Ausnehmung 13 zumindest ein Permanentmagnet 14) wird dabei ein Pol des Rotors 9 gebildet. Der Rotor 9 weist in dieser Ausführung V-förmig angeordnete Permanentmagnete 14 auf, die einen Pol des Rotors 9 bilden. Die V-förmige Anordnung der Permanentmagnete 11 hat den Vorteil, dass unter anderem die Magnetfelddichte im Luftspalt 25 erhöht wird. Man spricht auch von einer Flusskonzentration.

Der Permanentmagnete 14 sind in dieser Ausführung jeweils quaderförmigen ausgeführt und befindet sich in einer Ausnehmung 13. Die Ausnehmung 13 wird nur abschnittsweise vom Permanentmagneten 14 eingenommen, wobei der Permanentmagnet 14 von Flusssperren 34 flankiert ist.

Diese Flusssperren 34 weisen entweder Luft oder amagnetischen Material auf. Diese Flusssperren 34 in den Polen des Rotors 9 sind notwendig, um magnetische Kurzschlüsse der Permanentmagnete 14 u.a. im Bereich der jeweiligen Pole zu vermeiden.

Zwischen den Flusssperren 34 und den Permanentmagneten 14 sind Stege 21 unterschiedlicher Ausprägung vorgesehen, die auf der zum Luftspalt 25 gewandten Seite also Richtung Außenumfang 18 des Rotors 9 der Ausnehmung 13 angeordnet sind. Durch diese Anordnung der Stege 21 kann zusätzlich eine Entmagnetisierung der Permanentmagnete 14, insbesondere in den Randbezirken der Permanentmagnete 14 beispielsweise durch einen Stoßkurzschluss im Wicklungssystem 7 des Stators 8 überwiegend vermieden werden.

Der Stator 8 ist in einem Gehäuse 2 angeordnet, das sich über Lagerschilde 3 und deren Lager 4 auf einer Welle 5 abstützt. Das Wicklungssystem 7 ist in Nuten 16 des Stators 8 untergebracht.

Ein Eigenlüfter 15 und/oder ein Fremdlüfter können sowohl den Stator 8 als auch den Rotor 9 über deren Kühlkanäle 12 bzw. 17 kühlen. Stator 8 und Rotor 9 weisen jeweils Blechpakete 10 bzw. 11 auf.

Aufgrund elektromagnetischer Wechselwirkung des über den Umrichter 50 bestromten Wicklungssystem 7 des Stators 8 über den Luftspalt 25 mit dem Rotor 9 dreht sich dieser um die Achse 6.

Um den Permanentmagneten 14 zu schützen ist nunmehr gemäß FIG 2 eine Schicht 20 in den jeweiligen Magnetkreisen 22 des Rotors 9 seriell zum Permanentmagneten 14 angeordnet. Diese Schicht 20 umfängt den Permanentmagneten 14 somit zumindest so weit, dass Feldlinien des Magnetkreises 22 durch die Schicht 20 "müssen".

Mit anderen Worten die Schicht 20 liegt jeweils in der Hauptflussrichtung der dynamoelektrischen Maschine 1 bzw. des Rotors 9 (d-Achse) und in Serie zum Permanentmagneten 14.

Die Schichtdicke kann variieren und ist an den Kanten des Permanentmagneten 14 tendenziell dicker ausgeführt als in der Mitte des Permanentmagneten 14. Als Material dieser Schicht 20 sei beispielhaft das Magnetisierverhalten von CeFeB genannt, welches bei einer Curie-Temperatur von ca. 150°C den Übergang zum paramagnetischen Zustand aufweist und eine maximale Gegenfeldfestigkeit (Koerzitivfeldstärke Hcj) von 50kA/m bei 20°C und 20kA/m bei 120°C aufweist.

Der Permanentmagnet 14 ist unter den normalen Betriebsbedingungen entmagnetisierungsfest ausgelegt und weist eine Curietemperatur typischerweise >300°C auf, die damit deutlich über seiner Arbeitstemperatur liegt (z.B.: Maximale Arbeitstemperaturen (unter Belastung) sind in der Regel ~150°C). Der Permanentmagnet 14 ist aus der Materialklasse der Neodym-Eisen-Bor Magnete (NdFeB).

Durch die aktive Beeinflussung des Magnetkreises 22 auf Grundlage des Einsatzes von Materialien mit diesen speziellen Stoffeigenschaften, insbesondere der Ausnutzung der Curie-Temperatur, wird erfindungsgemäß sowohl ein reversibler Eigenschutz des Magnetkreises 22, als auch eine einfache Detektion einer Grenztemperatur der Permanentmagnete 14 geschaffen.

Diese Schicht 20 wird entweder direkt auf den Permanentmagneten 14 positioniert und bei der Montage des Permanentmagneten 14 in die Ausnehmung 13 axial gleichzeitig eingeschoben oder als eigenes Bauteil unabhängig davon separat axial eingesetzt. Ebenso kann dieses Material einem Kleber beigemengt werden, der zur Fixierung des Permanentmagneten 14 in seiner Ausnehmung 13 vorgesehen wird. Auch damit wäre diese Schicht 20 dann in der Ausnehmung 13 und damit am Permanentmagneten 14 in der Hauptflussrichtung angeordnet. Falls diese Schicht 20 in einem eigenen axial verlaufenden Schlitz des Blechpakets 11 von der Ausnehmung 13 beabstandet vorgesehen wird, kann diese Schicht 20 als formbares, plattenförmiges Element oder als Vergussmasse mit dementsprechenden Additiven ausgeführt sein.

Neben dem Vorteil, dass diese Stege 21 bzw. Halterungen etwaigen Entmagnetisierungserscheinungen bei einem Stoßkurzschluss des Wicklungssystems 7 entgegenwirken, sind diese Stege 21 bzw. Halterungen auch zur Positionierung und Fixierung der Permanentmagnete 14 in der Ausnehmung 13 geeignet.

Die Permanentmagnetanordnung einer Ausnehmung 13 und/oder eines Pols des Rotors 9 kann demnach einen einstückig ausgeführten Permanentmagnet 14 oder mehrere Permanentmagnete 14 aufweisen. Die Permanentmagnete 14 mit oder ohne Schicht 20 liegen dabei an der Luftspaltseite 23 und/oder der Achsseite 24 der Ausnehmung 13 komplementär an. Mit anderen Worten, es ist ein durchgängiger Kontakt, ggf. mit einer Klebeschicht/Vergussmasse versehen, von Blechen und Permanentmagneten 14 vorhanden.

Die Pole des Rotors 9 sind, in Umfangsrichtung betrachtet bzgl. ihrer Magnetisierungsrichtung alternierend angeordnet.

Öffnungen 17 dienen der Reduzierung der Trägheit des Rotors 9, als auch einer Kühlung des Rotors 9 und seiner Permanentmagnete 14.

Die der Erfindung zugrundeliegende Idee lässt sich ebenso auf permanenterregte Synchronmaschinen übertragen, die Rotoren 9 mit Permanentmagneten 14 an ihrer Außenoberfläche 18 aufweisen. Dabei sind diese Schichten 20 radial unterhalb oder oberhalb der Permanentmagnete 14 angeordnet, mit anderen Worten zwischen Achse 6 des Rotors 9 und den jeweiligen Permanentmagneten 14 oder zwischen Permanentmagneten 14 und Luftspalt 25.

Konkret wird die Gegenfeldbelastung der Permanentmagnete 14 bei einem bestimmten Stromzustand reduziert, indem der magnetische Widerstand des Magnetkreises erhöht wird. Somit kann beispielsweise ein Motor 1 im Hinblick auf die Entmagnetisierungsfestigkeit entweder höhere Maximalströme führen oder aber bei gegebenem Maximalstrom erhöhte Magnettemperaturen zulassen.

Mittels dieser Schicht 20 wird zunächst eine Schutzfunktion, insbesondere für die Permanentmagnete 14 geschaffen. Das "Ansprechen" der Schicht 20 mit den damit einhergehenden Änderungen der Motorparametern (z.B. Induktivität oder Leerlauf-Spannung (EMK)) ermöglicht weiterhin eine Detektion der Übertemperatur z.B. im Rotor 9 (z.B. über den Umrichter 50). Eine geeignete Detektion ist notwendig, um einen weiteren Temperaturanstieg durch geeignete Gegenmaßnahmen zu verhindern bzw. aktiv Maßnahmen zur Temperaturreduktion einzuleiten.

Die Verfahren zur Detektion sind beispielsweise die Ermittlung der EMK-Spannungsamplitude während des Betriebs der dynamoelektrischen Maschine 1 oder die Ermittlung der d-Induktivität des Rotors 9. Dabei können diese Werte aus den Betriebsströmen ermittelt werden. Der Umrichter 50 weist für die Regelung 35 Stromwandler auf, die den Strom des Motors 1 zuverlässig überwachen. Darüber hinaus ist aus dem Aussteuergrad auch die Spannung an den Motorklemmen bekannt.

Sowohl die Spannung als auch der Strom der dynamoelektrischen Maschine 1 können regelungstechnisch in komplexe Raumzeiger überführt werden. Aus der Phasenbeziehung und den Amplituden lassen sich EMK und Induktivität sowie der Phasenwinkel ϕ bestimmen, die als Ersatzschaltbild der dynamoelektrischen Maschine 1, insbesondere der Synchronmaschine hinreichend gut beschreiben und den Betriebszustand der Synchronmaschine erkennen lassen. Insbesondere lässt sich aus dem Quotienten von Raumzeiger der Spannung und Raumzeiger des Stroms eine komplexe Impedanz bestimmen, dessen Realteil ein Maß für die EMK und dessen Imaginärteil ein Maß für die Induktivität des Motorersatzschaltbildes ist.

Alternativ oder zur Steigerung der Genauigkeit dieser Parameter ist es möglich, der Betriebsspannung Testimpulse zu überlagern. Ebenso eignen sich die Testimpulse des Umrichters 50, wenn der Motor 1 im Leerlauf betrieben wird. Die entstehenden Zeitverläufe, bspw. die Änderungsgeschwindigkeit des Stromes zum Zeitpunkt des Testimpulses kann zur Bestimmung der Induktivität und/oder EMK herangezogen und zur Entscheidung, ob in den "Normalzustand" des Antriebs gewechselt werden kann oder ob zusätzliche Maßnahmen zur Temperaturreduzierung einzuleiten sind.

Im einfachsten Fall kann eine Veränderung des magnetischen Verhaltens der Maschine 1 über die EMK erkannt werden, da der Fluss als Faktor in die Höhe der EMK eingeht. Eine verringerte EMK lässt sich beispielsweise am Wirkstrom erkennen, die elektrische Maschine 1 zur Aufrechterhaltung eines geforderten Moments einen höheren Wirkstrom benötigt.

Alternativ oder ergänzend kann das veränderte Verhalten der Maschine 1 anhand des veränderten Blindstroms zur Erzeugung des Magnetfeldes erkannt werden. Da sich Wirkstrom und Blindstrom beide auf den Phasenwinkel ϕ auswirken, steht mit der Auswertung des Phasenwinkels eine besonders robuste Größe zur Erkennung eines veränderten Magnetischen Verhaltens zur Verfügung.

Die Regelung 35 des Umrichters 50 kann darüber hinaus unplausible Betriebszustände dadurch plausibilisieren, dass die Induktivität an die Betriebsbedingungen angepasst wird. Damit ist es möglich, auch im Störfall eine hohe Regelungsdynamik zu erreichen. Des Weiteren kann damit der zeitliche Verlauf der thermischen Überbeanspruchung erfasst werden. Somit ist erkennbar, ob sich die magnetischen Verhältnisse verbessern oder kritischer werden und weitere Schutzreaktionen erfordern.

Damit greift die Regelung 35 des Antriebs bei Erkennen der veränderten magnetischen Bedingungen über den Umrichter 50 am Motor ein, indem sie die einspeisende Leistung in die dynamoelektrischen Maschine 1 zurücknimmt oder ein Notabschalten aufgrund der Motorüberhitzung einleitet. Es muss auf jeden Fall sichergestellt sein, dass die Rotortemperatur zurückgeht. Dies kann beispielsweise in Form einer Leistungsbegrenzung, Momentenbegrenzung oder einer Veränderung, insbesondere Erhöhung, der Taktfrequenz des Umrichters oder einer forcierten Kühlung erfolgen.

Mit der Kenntnis der Ersatzschaltbildgrößen können Rückschlüsse auf den thermischen Zustand der elektrischen Maschine 1, insbesondere des Rotors 9 und dessen Permanentmagneten 14 getroffen werden. Daraufhin oder erst nach einer weiteren Berechnung einer entsprechenden Temperatur kann die Regelung 35 des Antriebs eingreifen, indem sie die einspeisende Leistung, das Moment in die dynamoelektrische Maschine 1 zurücknimmt, die Taktfrequenz des Umrichters 50 ändert oder eine und/oder Notabschalten aufgrund einer Motorüberhitzung einleitet.

Dies kann ggf. auch durch eine forcierte Kühlung der dynamoelektrischen Maschine 1 mittels Fremdlüfter erfolgen, die durch die dem Umrichter 50 zugeordneten Regelung 35 ansteuerbar sind.

Der beschriebene Vorgang schützt zum einen direkt das Magnetmaterial, also den Permanentmagneten 14 im Rotor 9 durch Absenken des belastenden Gegenfeldes, erlaubt auf der anderen Seite über die feststellbare Beeinflussung 37 der Betriebsgrößen der Maschine 1 (z.B. des Stromes) eine Erfassung der Temperaturüberschreitung durch einen entsprechenden Detektion-Algorithmus im speisenden Umrichter 50. Dies erfolgt beispielsweise durch einfache Maßnahmen wie z.B. Überstrom-Detektion im Umrichter 50.

Mit dieser Anordnung ist ein zweistufiger Schutz realisierbar, der es ermöglicht, hohe Sicherheitsanforderungen zu erreichen. Der primäre Schutz durch die verwendeten Materialien in der dynamoelektrischen Maschine 1 machen diese sicher und schützen diese vor einer Zerstörung. Darüber hinaus greift der stromrichterseitige Schutz in das Betriebsverhalten derart ein, dass ein Defekt oder auch eine Verkürzung der Lebensdauer der dynamoelektrischen Maschine 1, insbesondere der Permanentmagneten 14 des Rotors 9 vermieden wird.

Derartige Rotoren 9 werden vor allem in permanenterregten Synchronmaschinen eingesetzt, die im industriellen Umfeld betrieben werden. Dabei sind sie als Antriebe von Pumpen, Lüfter, Verdichter, Kompressoren, Rollgängen, Förderanlagen vorgesehen, mit einer kontinuierlichen Betriebsdauer die den Antrieb (insbesondere Motor 1 und Umrichter 50) thermisch stark fordert und erfindungsgemäß überwacht wird. Derartige Synchronmaschinen sind auch bei Traktionsantrieben wie Miningfahrzeugen, E-Bussen, Straßenbahnen oder Zügen einsetzbar, um auch durch die Erhöhung der Gegenfeldstabilität einen zuverlässigeren Betrieb zu gewährleisten.

Die der Erfindung zugrundeliegende Idee lässt sich ebenso auf permanenterregte Synchronmaschinen mit Außenläufer übertragen, wie sie z.B. bei direkt angetriebenen Generatoren von Windkraftanlagen eingesetzt werden.

Die der Erfindung zugrundeliegende Idee lässt sich ebenso auf andere dynamoelektrische Maschinen 1 übertragen, die in ihren Rotoren 9 Permanentmagnete 14 aufweisen, also z.B. Synchronmaschinen mit einem Anlaufkäfig oder Synchron-Reluktanz-Maschinen mit Permanentmagneten 14.

### Bezugszeichenliste

- 1: dynamoelektrische Maschine
- 2: Gehäuse
- 3: Lagerschild
- 4: Lager
- 5: Welle
- 6: Achse
- 7: Wicklungssystem
- 8: Stator
- 9: Rotor
- 10: Blechpaket Stator
- 11: Blechpaket Rotor
- 12: Kühlkanal Stator
- 13: Ausnehmung Rotor für Permanentmagnete
- 14: Permanentmagnet
- 15: Eigenlüfter
- 16: Nuten Stator
- 17: Kühlöffnung
- 18: Außenumfang des Rotors
- 20: Schicht
- 21: Steg
- 22: Magnetkreis
- 23: Luftspaltseite des Permanentmagneten
- 24: Achsseite des Permanentmagneten
- 25: Luftspalt
- 34: Flusssperre
- 35: Regelung
- 37: Energie- und/oder Datenaustausch
- 50: Umrichter
- N: Nordpol
- S: Südpol

## Patentansprüche

1. Verfahren zur thermischen Betriebsoptimierung einer mit einem Umrichter (50) gespeisten dynamoelektrischen Maschine (1) eines mit Permanentmagneten (14) bestückten Rotors (9),
wobei der Rotor (9) einen magnetisch leitfähigen Grundkörper, insbesondere ein axial geschichtetes Blechpaket (11) aufweist, der in im Wesentlichen axial verlaufenden Ausnehmungen (13) zumindest abschnittsweise umfänglich und/oder axial Permanentmagnete (14) vorsieht,
wobei ein oder mehrere Permanentmagnete (14) einen Pol (19) bilden, der einen Nordpol (N) oder Südpol (S) Richtung Außenumfang (18) des Rotors (9) ausbildet,
wobei der leitfähige Grundkörper und die jeweiligen Permanentmagnete (14) Teil jeweils eines geschlossenen Magnetkreises (22) bilden,
wobei in den Magnetkreisen (22) Mittel vorhanden sind, die in Magnetisierungsrichtung der Permanentmagnete (14) magnetisch in Serie angeordnet sind und die Permanentmagnete (14) vor Übertemperatur und damit vor irreversibler Entmagnetisierung schützen, wobei jeder Pol des Rotors (9) oder jeder Permanentmagnet (14) eine Schicht (20) aufweist, indem das Mittel bei Überschreiten einer vorgebbaren Grenztemperatur eine stoffspezifische Beeinflussung des Magnetkreises (22) bewirkt, wobei dabei
- Änderungen der EMK und/oder
- Änderung der Induktivitäten (dL/dt) der dynamoelektrischen Maschine (1), und/oder
- Änderung des Phasenwinkels ϕ als Phasenverschiebung zwischen Motorstrom und Motorspannung bzw. Ausgangsstrom und Ausgangsspannung des Umrichters (50), und/oder
- Abweichungen von einem hinterlegten Flussmodell,
erfasst werden, um dann daraus weiterer temperaturreduzierende Aktionen, wie zumindest-Stromreduktion, Lastreduktion oder Notabschalten der dynamoelektrischen Maschine (1) und/oder Zuschalten eines Fremdlüfters einzuleiten, um thermisch nach einer minimierten Zeit wieder zuschalten zu können.

2. Verfahren nach Anspruch 1, **dadurch gekennzeichnet, dass** bei der thermisch bedingten Abschaltung der dynamoelektrischen Maschine (1) bei der Grenztemperatur der Permanentmagneten (14) des Rotors (9) ein zeitiger (Wieder-) Zuschaltzeitpunktes derart bestimmt wird, dass der Umrichter (50) in die Maschine, insbesondere bei Leerlauf der elektrischen Maschine Testimpulse einspeist, um sich daraus ergebende
- Änderungen der EMK und/oder
- Änderung der Induktivitäten (dL/dt) der dynamoelektrischen Maschine (1), und/oder
- Änderung des Phasenwinkels ϕ als Phasenverschiebung zwischen Motorstrom und Motorspannung bzw. Ausgangsstrom und Ausgangsspannung des Umrichters (50), und/oder
- Abweichungen von einem hinterlegten Flussmodell,
zu überprüfen und zu bestimmen, ob in den "Normalzustand" des Antriebs gewechselt werden kann oder ob zusätzliche Maßnahmen zur Temperaturreduzierung einzuleiten sind.

3. Rotor (9) einer dynamoelektrischen Maschine (1) mit Permanentmagneten (14) zur Durchführung des Verfahrens nach Anspruch 1 oder 2, mit einem magnetisch leitfähigen Grundkörper, insbesondere einem axial geschichteten Blechpaket (11), der in im Wesentlichen axial verlaufenden Ausnehmungen (13) zumindest abschnittsweise umfänglich und/oder axial Permanentmagnete (14) vorsieht,
wobei ein oder mehrere Permanentmagnete (14) einen Pol bilden, der einen Nordpol (N) oder Südpol (S) Richtung Außenumfang (18) des Rotors (9) ausbildet,
wobei der leitfähige Grundkörper und die jeweiligen Permanentmagnete (14) Teil jeweils eines geschlossenen Magnetkreises (22) bilden,
wobei in den Magnetkreisen (22) Mittel vorhanden sind, die in Magnetisierungsrichtung der Permanentmagnete (14) magnetisch in Serie angeordnet sind und die Permanentmagnete (14) vor Übertemperatur und damit vor irreversibler Entmagnetisierung schützen,
wobei jeder Pol (19) des Rotors (9) oder jeder Permanentmagnet (14) eine Schicht (20) aufweist, die eine stoffspezifische Beeinflussung des Magnetkreises (22) bei Überschreiten einer vorgebbaren Grenztemperatur bewirkt, um eine irreversible Entmagnetisierung der Permanentmagnete (14) zu vermeiden,

4. Rotor (9) einer dynamoelektrischen Maschine (1) mit Permanentmagneten (14) nach Anspruch 3, **dadurch gekennzeichnet, dass** die Dicke der Schicht (20) mindestens 0,5 mm beträgt.

5. Rotor (9) einer dynamoelektrischen Maschine (1) mit Permanentmagneten (14) nach Anspruch 3 oder 4, **dadurch gekennzeichnet, dass** die Schicht (20) den magnetischen Pol (19) oder den Permanentmagneten (14) zumindest teilweise umfänglich umgibt.

6. Rotor (9) einer dynamoelektrischen Maschine (1) mit Permanentmagneten (14) nach Anspruch 3 oder 4, **dadurch gekennzeichnet, dass** die Schicht (20) direkt an dem Permanentmagneten (14) anliegt oder davon beabstandet ist.

7. Rotor (9) einer dynamoelektrischen Maschine (1) mit Permanentmagneten (14) nach einem oder mehreren der vorhergehenden Ansprüche 3 bis 6,
**dadurch gekennzeichnet, dass** die Dicke der Schicht (20) und/oder der Abstand zum Permanentmagneten (14) unterschiedlich ausgeprägt ist.

8. Rotor (9) einer dynamoelektrischen Maschine (1) mit Permanentmagneten (14) nach einem oder mehreren der vorhergehenden Ansprüche 3 bis 7,
**dadurch gekennzeichnet, dass** die Schicht (20) aus CeFeB gebildet ist.

9. Rotor (9) einer dynamoelektrischen Maschine (1) mit Permanentmagneten (14) nach einem oder mehreren der vorhergehenden Ansprüche 3 bis 8,
**dadurch gekennzeichnet, dass** die Permanentmagnete (14) NdFeB enthalten.

10. Rotor (9) einer dynamoelektrischen Maschine (1) mit Permanentmagneten (14) nach einem der vorhergehenden Ansprüche 3 bis 9, **dadurch gekennzeichnet, dass** die Ausnehmungen (13) eines Pols (19) des Rotors (9) insbesondere tangential oder in V-Form oder in Doppel-V-Form oder in U-Form angeordnet sind.

11. Dynamoelektrische Maschine mit einem Rotor (9) mit Permanentmagneten (14) zur Durchführung des Verfahrens nach Anspruch 1 oder 2, mit einem magnetisch leitfähigen Grundkörper, insbesondere einem axial geschichteten Blechpaket (11), der in im Wesentlichen axial verlaufenden Ausnehmungen (13) zumindest abschnittsweise umfänglich und/oder axial Permanentmagnete (14) vorsieht,
wobei ein oder mehrere Permanentmagnete (14) einen Pol bilden, der einen Nordpol (N) oder Südpol (S) Richtung Außenumfang (18) des Rotors (9) ausbildet,
wobei der leitfähige Grundkörper und die jeweiligen Permanentmagnete (14) Teil jeweils eines geschlossenen Magnetkreises (22) bilden,
wobei in den Magnetkreisen (22) Mittel vorhanden sind, die in Magnetisierungsrichtung der Permanentmagnete (14) magnetisch in Serie angeordnet sind und die Permanentmagnete (14) vor Übertemperatur und damit vor irreversibler Entmagnetisierung schützen,
wobei jeder Pol (19) des Rotors (9) oder jeder Permanentmagnet (14) eine Schicht (20) aufweist, die eine stoffspezifische Beeinflussung des Magnetkreises (22) bei Überschreiten einer vorgebbaren Grenztemperatur bewirkt, um eine irreversible Entmagnetisierung der Permanentmagnete (14) zu vermeiden,
wobei die Dicke der Schicht (20) < 25 % einer Dicke des Permanentmagneten (14) in Magnetisierungsrichtung entspricht,
wobei der Magnetkreis (22) zumindest mit einem mittels eines Umrichters (50) bestromten Wicklungssystem (7) eines Stators (12) der dynamoelektrischen Maschine (1) und den Permanentmagneten (14) des Rotors (9) elektromagnetisch wechselwirkt.

12. Antrieb mit einem Umrichter (50) und einer dynamoelektrischen Maschine (1) nach Anspruch 11, wobei über eine dem Umrichter (50) zugeordnete Regelung (35) u.a. durch Monitoring der vorgebbaren Motorparameter die Grenztemperatur der Permanentmagnete (14) überwachbar ist.

13. Förderanlage, Kompressor, Verdichter oder Traktionsantrieb mit zumindest einem Antrieb nach Anspruch 12.
